Europäisches Patentamt

European Patent Office

Office européen des brevets

(19)

(11) Publication number: **0 416 260 A1**

# EUROPEAN PATENT APPLICATION

(12)

(21) Application number: **90114064.0**

(22) Date of filing: **23.07.90**

(51) Int. Cl.⁵: **B30B 9/32**, B30B 1/24, F16H 19/00

(30) Priority: **31.08.89 IT 8347089**

(43) Date of publication of application:
**13.03.91 Bulletin 91/11**

(84) Designated Contracting States:
**AT BE CH DE DK ES FR GB GR IT LI LU NL SE**

(71) Applicant: **Cattarossi, Sante**
**Via Stagnà 6**
**I-33010 Reana del Rojale (UD)(IT)**

(72) Inventor: **Cattarossi, Sante**
**Via Stagnà 6**
**I-33010 Reana del Rojale (UD)(IT)**

(74) Representative: **Petraz, Gilberto Luigi**
**G.L.P. S.a.S. di Gilberto Petraz P.le Cavedalis 6/2**
**I-33100 Udine(IT)**

(54) **Device to crush cans.**

(57) Device to crush cans, which is suitable to reduce to compressed wafers the empty metallic cans used to hold beverages or other products and comprises a stationary plate (17) and a compression plate (23) able to move axially towards the stationary plate (17), the compression plate (23) forming part of a compression assembly (14) that includes rack means cooperating with an actuation wheel (15), motive means (16) being comprised which act on a shaft of the actuation wheel (15), the rack means being a multi-stage rack (24) consisting of a plurality of racks (27), while the actuation wheel (15) includes a number of toothed wheels (28) of different diameters cooperating with the respective racks (27).

fig.1

EP 0 416 260 A1

## DEVICE TO CRUSH CANS

This invention concerns a device to crush cans. To be more exact, the invention concerns a device to crush empty metallic cans of the type used, for instance, to hold beverages or other products.

The cans may consist of aluminium and alloys thereof or of steel and alloys thereof.

It is known that when these cans are empty, they have an especially inconvenient ratio of full to empty space. In fact, although they consist of little material, they take up a great deal of space.

Such empty cans are now usually thrown into refuse bins, even into bins specially provided for their recovery, in their actual condition since it is hard and burdensome to crush them.

Some persons deform them sideways, by hand for instance, but in actual fact such deformation reduces by very little the space they take up.

US 2,638,957 discloses the obtaining of a means to crush cans by making use of a gearwheel acting on a single rack. This teaching provides neither for differentiation of the action of force nor for an initial first crushing action. Moreover, it arranges to crush the cans by an action normal to the axis of the can and not axial to the can.

US 4,334,469 too provides for the coupling of a gearwheel with a rack, but the action reaches the gearwheel through a speed reduction unit with gearwheels which reduces the manual force. The action is axial to the can but is not differentiated, so that the effort of the user of the device has to be varied during the crushing cycle.

US 4,345,519 discloses a teaching analogous to that of the above cited texts.

The present applicant has designed, tested and embodied a device suitable to crush various types of cans axially and to obtain compact enough disks or wafers of metal.

The device to crush cans according to the invention is set forth in the main claim, while the dependent claims describe variants of the idea of the solution.

According to the invention a plate is provided which is able to move (during the compression action) axially as required towards a plate which is stationary (during the compression action), the can being located in a position between the two plates.

Devices may be provided with suitably dimensioned plates to crush more than one can at a time.

Suitable plates may also be provided to crush the cans sideways, or sideways as well as axially.

The movable plate is actuated by a multi-stage rack, which in turn is actuated by an actuation wheel having a plurality of diameters.

The multi-stage rack consists of a plurality of mutually adjustable racks which cooperate with each other and comprise a plurality of engagement teeth positioned in sequence.

Moreover, a plurality of rows of teeth may be included on each rack and each single row may be actuated as required.

The engagement teeth cooperate with an actuation wheel consisting of a plurality of coaxial toothed wheels having different, coordinated diameters. These toothed wheels may always be integrally fixed together, or one or more wheels may be made momentarily able to idle.

These engagement teeth are positioned on the respective racks in such a way that, when the drawing effect of one toothed wheel on one rack ends, the next rack is actuated by the next toothed wheel.

Since the engagement of the toothed wheels during the crushing step takes place in sequence, starting with the biggest diameter and proceeding to the smallest, the crushing action, as it progresses, increases although the force applied to the actuation means remains very small.

According to a variant a toothed wheel of a smaller diameter may be used transiently at the beginning of the crushing action so as to overcome with a little force the intial opposition to the crushing action.

According to another variant the height of the stationary plate can be adjusted, possibly at preset positions, so as to adapt the device to the various heights of the cans.

According to a first embodiment the toothed actuation wheel is operated by means of a lever.

According to a second embodiment the toothed actuation wheel is operated by means of an electric motor.

According to a variant gearing-down means, for instance comprising a toothed wheel, may be provided between the drive means and the toothed actuation wheel.

According to a further variant the smallest toothed wheel is actuated momentarily during the first crushing action, while the rack cooperating with the biggest toothed wheel is left momentarily free to run axially to take up the difference of travel between those two toothed wheels.

The attached figures, which are given as a non-restrictive example, show a preferred embodiment of the invention.

Fig.1 gives a side view of possible sections of the invention;

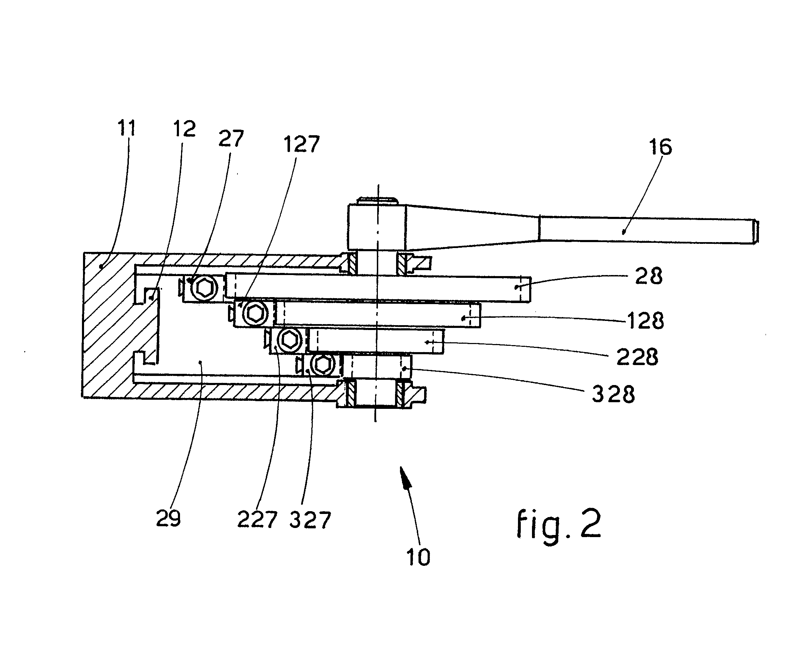

Fig.2 shows a possible horizontal section of the invention;

Figs.3 to 5 show an evolutive variant.

The example shown arranges that the cans to be compressed are kept with their axis vertical, but it remains within the spirit of the invention if the cans and the device are kept with their axis oriented in any desired direction, even horizontally.

The example provides for one can to be compressed at a time, but if the plates are suitably arranged, two or even more cans can be compressed by the device at a time.

In the figures a crushing device 10 comprises an upright 11 with guides 12 that guide a compression assembly 14, so that a movable compression plate 23 can move in a coordinated manner towards a stationary plate 17 borne on a bench 13.

The stationary plate 17 comprises a seating 18 to hold a cam 19 correctly.

The height of the stationary plate 17 can be adjusted as required by an adjustment screw 20 so that the device 10 can be suited to the various sizes of cans 19.

The compression assembly 14 is actuated by a multiple actuation wheel 15, which is moved by a lever 16.

The compression assembly 14 includes a frame 29, the compression plate 23 and a multi-stage rack 24, which consists of a plurality of racks 27 (four racks 27-127-227-327 in the example shown).

Each rack 27 has its own engagement teeth 25 arranged in each rack 27 in a position coordinated with the teeth of the preceding and/or successive rack.

The axial position of each rack 27 can be adjusted in relation to the preceding and/or successive rack by adjustment screws 21 and thrust springs 22.

The individual racks 27 are held between the frame 29 and the compression plate 23 solidly fixed to the frame 29 and in fact are firmly secured to the frame and compression plate even though their reciprocal positioning can be adjusted.

Single relative toothed wheels 28-128-228-328 cooperate with the individual racks 27-127-227-327 and constitute the actuation wheel 15.

The position of the engagement teeth 25 on the racks 27 is such that, when for instance the teeth of the second rack 127 are released from the second toothed wheel 128, the teeth of the third rack 227 are in fact already engaged by the third toothed wheel 228.

The position of the racks 27 in relation to the axis of rotation of the actuation wheel 15 differs progressively in direct cooperation with the diameters of the specific individual toothed wheels which cooperate with the specific racks 27.

The actuation wheel 15 has its axis of rotation stationary in relation to the frame 11 and bench 13, while the compression assembly 14 is movable.

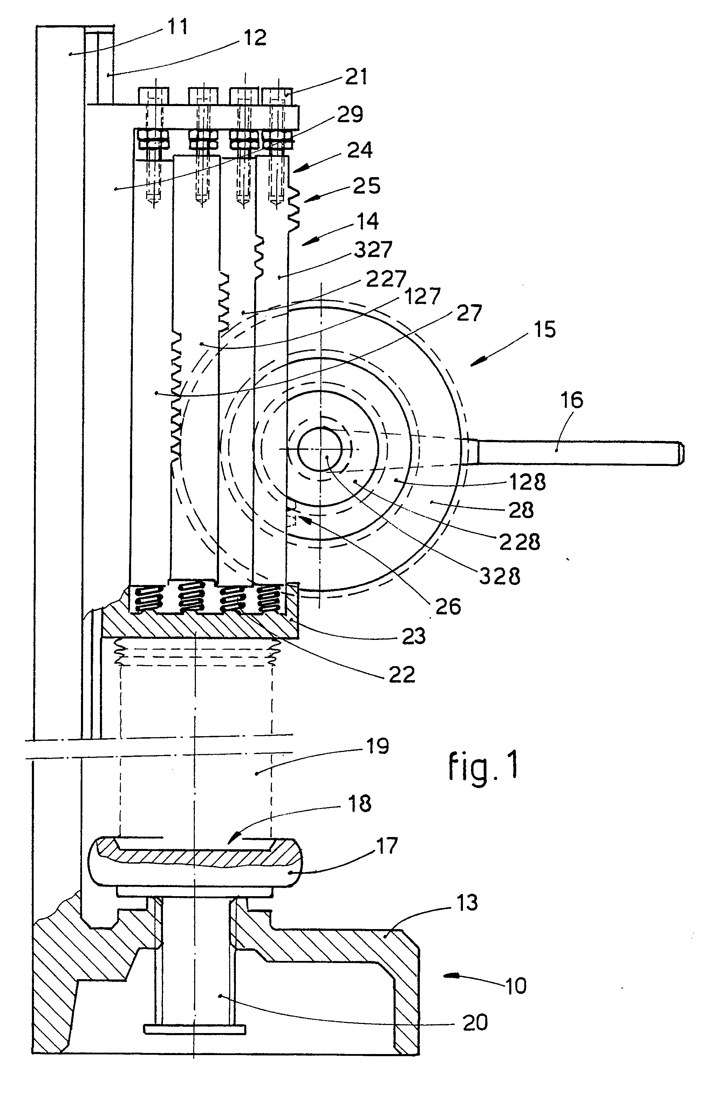

Fig.1 shows engagement teeth 25 of the fourth rack 327 providing the first crushing action; these teeth 25 engage initially the fourth toothed wheel 328 of a small diameter and enable the first crushing action to be performed with little effort.

When the first crushing action has been carried out, the engagement teeth 25 are released and the normal engagement sequence of rack and toothed wheel 27-28, 127-128, 227-228 and 327-328 begins.

According to a variant at least some racks 27 have teeth 25 on more than one side and can be positioned circumferentially so as to make the toothed wheels 28 cooperate with the teeth included on any side of a rack.

Thus, it is possible to produce differing effects of pressure and to act on different cans 19 axially or sideways.

It is also possible to exclude one or more racks 27.

According to another variant the seating 18 cooperates with the compression plate 23 to produce wafers of desired sizes. The seating 18 can therefore have a desired shape relating to the desired characteristics of the compressed metallic wafer.

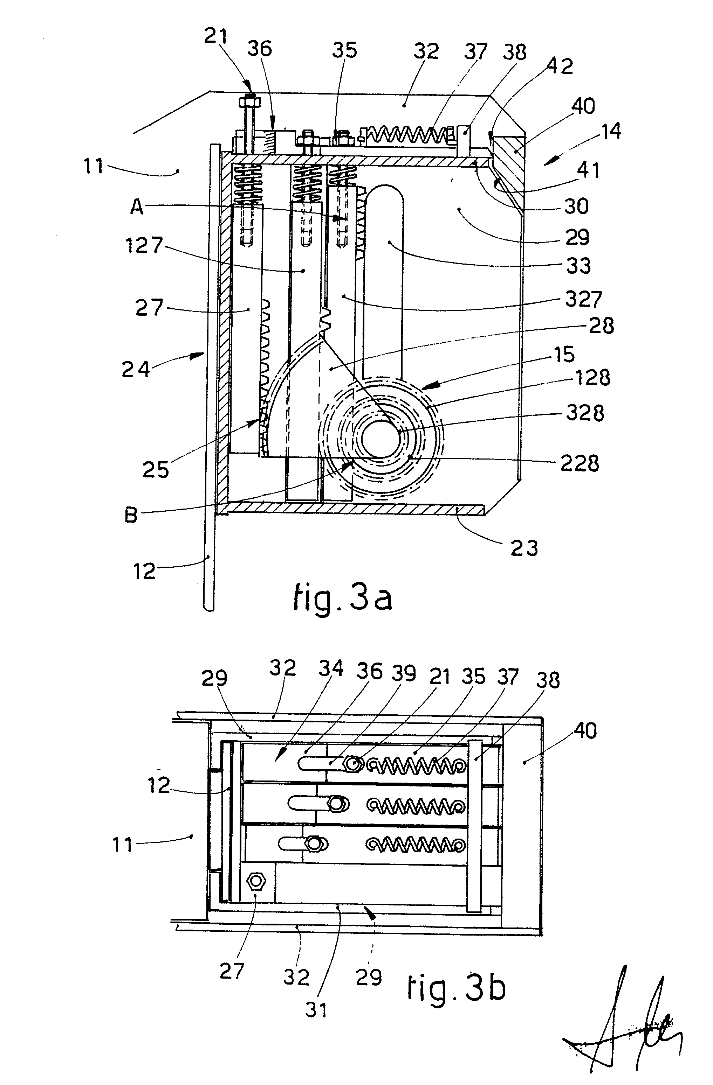

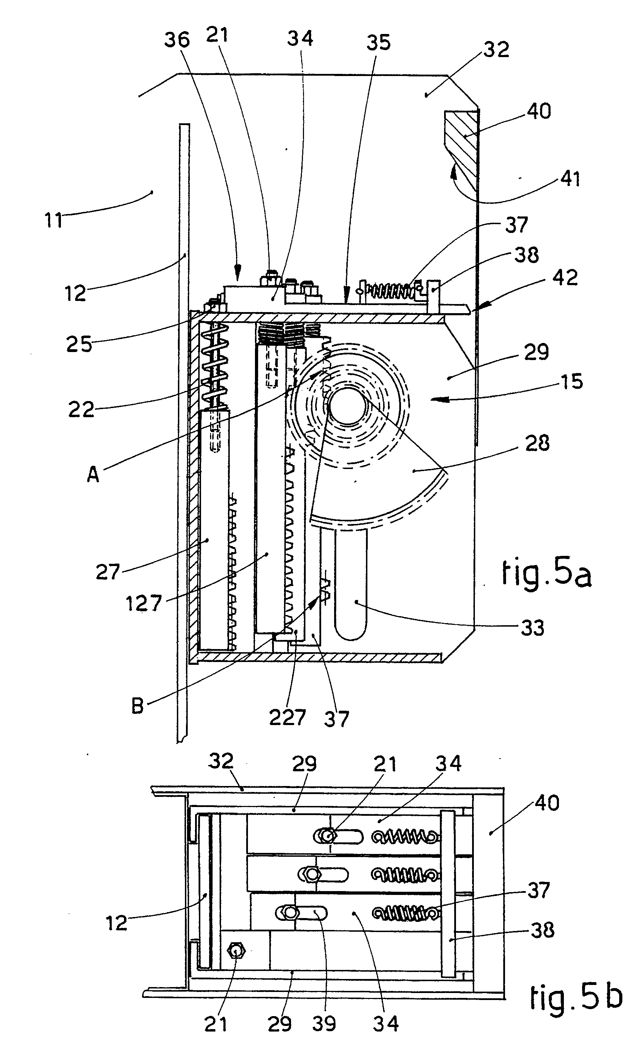

In the variant shown in Figs.3 to 5 the frame 29 of the compression assembly 14 is substantially box-shaped with the compression plate 23 below, a support 30 above and sidewalls 31 in this example.

The frame 29 slides in guides 12 of the upright 11, which in this case comprises lateral guide and support elements 32.

In this instance the sidewalls 31 comprise slots 33 for the passage of the shaft of the multiple actuation wheel 15, which can rotate and is firmly secured to the lateral guide and support elements 32.

The compression plate 23 comprises anchorage means (not shown here) for any specially shaped ccompression elements.

In this case the first toothed wheel 28 of the multiple actuation wheel 15 is embodied in the form of a sector so as to reduce the overall bulk.

In this example four racks 27 are shown, but the racks may be more or less than four in number.

In the variant of Figs.3 to 5 the thrust springs 22 act in an inverted manner as compared to the embodiment of Fig.1.

In this variant the second 127, third 227 and fourth 327 racks cooperate with insertion slide blocks 34, as will be described hereinafter.

The insertion slide blocks 34 comprise two surfaces 35 and 36 and slide on the support 30, being actuated by springs 37 secured to a beam 38 located on the support 30.

The slide blocks 34 also include slots 39 in which the adjustment screws 21 can slide; these slots 39 extend in both the surfaces 35 and 36 of the slide blocks.

The slide blocks 34 comprise a terminal disabling/enabling bevel 42 suitable to cooperate with an inclined surface 41 of a cross member 40, positioned between the lateral elements 32, when the compression assembly 14 is in its upper position.

When the compression assembly 14 rises, the inclined surface 41 thrusts against the disabling/enabling bevel 42 of the slide blocks 34, pushes the blocks 34 towards the guide 12 and overcomes the force of the relative return springs 37.

When the slide block 34 is moved towards the guide 12, it moves its upper surface 36 towards the guide 12 and sets its lower surface 35 in correspondence with the relative adjustment screw 21, so that the adjustment screw 21 is free to descend owing to the action also of the thrust spring 22, and the relative rack 127-227-327 is free to descend together with the adjustment screw 21.

Let us now see the method of working. At the beginning of the crushing action, since a greater thrust is required for the initial transient stage of crushing and although the first wheel 28 is engaged with the first rack 27, for the first segment of movement it is the fourth wheel 328 that acts on the fourth rack 327, namely on the teeth 25B of the rack 327.

As the speeds of the racks and wheels are different, the first rack 27 is moved downwards without working, while the fourth rack 327 already resting on the compression plate 23 is working.

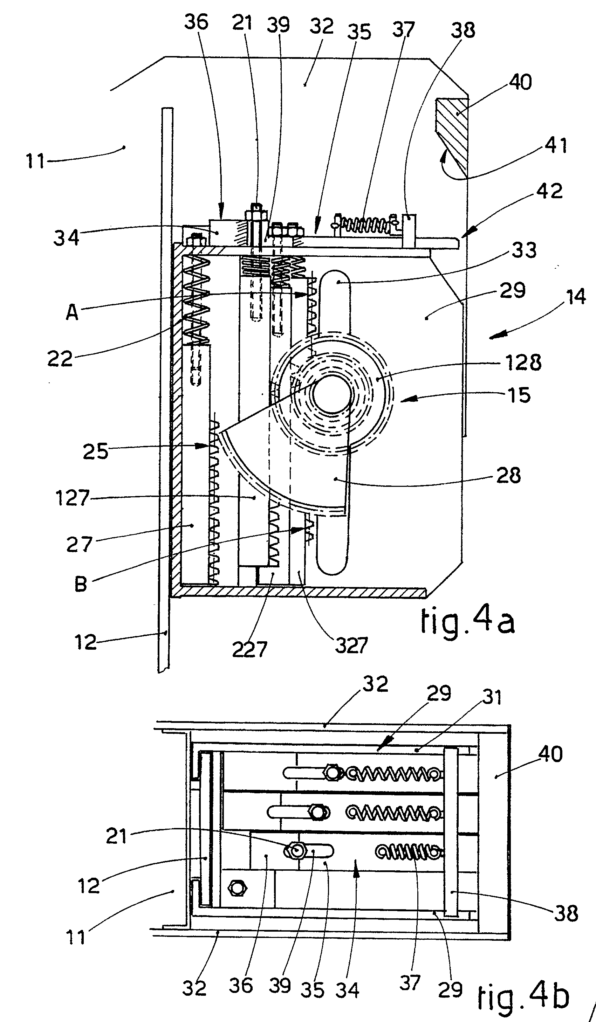

When the first rack 27 too (Fig.4a) reaches the end of its travel, the fourth wheel 328 reaches the segment of the fourth rack 327 without teeth 25 between A and B.

The action on the various racks 27-127-227 by the wheels 28-128-228 continues until the third wheel 228 reaches the end of its travel (the end of the teeth 25 of the third rack 227), while the fourth wheel 328 engages the second set of teeth 25A of the fourth rack 327.

In this way it is possible to have available the maximum force in the initial transient crushing moment.

As there is a difference in the speed of displacement, during the transient moment of the passage from one thrusting rack to the next rack the latter rack in fact tends to ascend within the compression assembly 14 and to overcome the thrust of the thrust spring 22.

The insertion slide blocks 34 have therefore been included to obviate empty segments of travel of the second rack 127.

These slide blocks 34 are positioned with their higher portion 36 pressing laterally on the adjustment screw 21 owing to the action of the return spring 37.

When the second rack 127 rises in relation to the frame 29 and overcomes the thrust of the thrust spring 22, it has the effect that the adjustment screw 21 is freed of the higher portion 36 of the slide block, and the higher portion 36 can be inserted below the screw 21.

The result is that, when the first rack 27 has ended its thrusting action and the second rack 127 begins its action, the second rack 127 can work at once since its travel has been taken up by the thickness of the higher portion 36 of the slide block 34.

The device may include a spring or counterweight to cause automatic return of the device to its zero position.

The invention provides for means to adjust the zero position of the racks.

## Claims

1 - Device to crush cans, which is suitable to reduce to compressed wafers the empty metallic cans used to hold beverages or other products and comprises a stationary plate (17) and a compression plate (23) able to move axially towards the stationary plate (17), the compression plate (23) forming part of a compression assembly (14) that includes rack means cooperating with an actuation wheel (15), motive means (16) being comprised which act on a shaft of the actuation wheel (15), the device being characterised in that the rack means are a multi-stage rack (24) consisting of a plurality of racks (27), while the actuation wheel (15) includes a number of toothed wheels (28) of different diameters cooperating with the respective racks (27).

2 - Device as claimed in Claim 1, in which the plurality of individual racks (27) of the multi-stage rack (24) bears engagement teeth (25) arranged in a progressive and graduated manner.

3 - Device as claimed in Claim 1 or 2, in which the racks (27) can be axially positioned reciprocally and in relation to a frame (29) of the multi-stage rack (24).

4 - Device as claimed in any claim hereinbefore, in which the individual racks (27) comprise thrust spring means (22).

5 - Device as claimed in any claim hereinbefore, in which at least one single rack (27) can be positioned circumferentially about its lengthwise axis.

6 - Device as claimed in any claim hereinbefore, in which at least one single rack (27) comprises at least two different sets of teeth positioned lengthwise on its periphery.

7 - Device as claimed in any claim hereinbefore, in which at least one single toothed wheel (28) can be excluded from work momentarily.

8 - Device as claimed in any claim hereinbefore, in which at least one rack function (327) provides two sets (A-B) of teeth arranged in sequence along the rack with an intermediate interspace between those sets.

9 - Device as claimed in any claim hereinbefore, in which an insertion slide block (34) cooperates with at least one rack (127-227-327) and has a low inactive position (35) and a high position (36) to eliminate excessive travel, return spring means (37) being included.

10 - Device as claimed in any claim hereinbefore, in which each insertion slide block (34) comprises disabling/enabling means (42) that cooperate with a stationary disabling/enabling surface (41) in the neighbourhood of the upper end of travel of the compression assembly (14).

fig. 1

fig. 2

fig. 3a

fig. 3b

tig.4a

tig.4b

fig.5a

fig.5b

European
Patent Office

EUROPEAN SEARCH
REPORT

Application Number

EP 90 11 4064

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US-A-4 345 519 (SABINO)<br>* Whole document *<br>— — — | 1 | B 30 B 9/32<br>B 30 B 1/24<br>F 16 H 19/00 |
| D,A | US-A-4 334 469 (TANNER)<br>* Whole document *<br>— — — | 1 | |
| D,A | US-A-2 638 957 (DANIELSON)<br>* Whole document *<br>— — — | 1 | |
| A | SOVIET INVENTIONS ILLUSTRATED, sections P/Q, week 8541, 20th November 1985, class Q64, accession no. 85-254789/41, Derwent Publications Ltd, London, GB;<br>& SU-A-1146 502 (CAR TRANSPT. SYSTEM) 23-03-1985<br>— — — — — | 1,2 | |

| TECHNICAL FIELDS SEARCHED (Int. Cl.5) |
|---|
| B 30 B<br>F 16 H |

The present search report has been drawn up for all claims

| Place of search | Date of completion of search | Examiner |
|---|---|---|
| The Hague | 10 December 90 | BOLLEN J.A.G. |

CATEGORY OF CITED DOCUMENTS

X : particularly relevant if taken alone
Y : particularly relevant if combined with another
document of the same category
A : technological background
O : non-written disclosure
P : intermediate document
T : theory or principle underlying the invention

E : earlier patent document, but published on, or after
the filing date
D : document cited in the application
L : document cited for other reasons

 

& : member of the same patent family, corresponding
document